(19) Europäisches Patentamt
European Patent Office
Office européen des brevets

(11) Publication number: **0 002 123**
**A1**

(12) **EUROPEAN PATENT APPLICATION**

(21) Application number: **78300615.8**

(22) Date of filing: **09.11.78**

(51) Int. Cl.²: **A 01 N 9/02,** C 07 F 9/00

(30) Priority: **11.11.77 GB 47146/77**

(43) Date of publication of application: **30.05.79**
**Bulletin 79/11**

(84) Designated Contracting States: **CH FR NL BE DE**

(71) Applicant: **PAN BRITANNICA INDUSTRIES LIMITED,**
**Britannica Works Waltham Abbey, Essex.**
**EN9 1NP (GB)**
(84) Designated Contracting States: **CH FR NL BE DE**

(71) Applicant: **STAUFFER CHEMICAL COMPANY,**
**Westport Connecticut 06880 (US)**
(84) Designated Contracting States: **CH FR NL BE DE**

(72) Inventor: **Purnell, Trevor John, Baytree Cottage,**
**Hinxworth Hertfordshire (GB)**

(74) Representative: **Ashmead, Richard John et al,**
**KILBURN & STRODE 30 John Street, London,**
**WC1N 2DD (GB)**

(54) **Insecticide preparation.**

(57) An insecticide preparation is disclosed comprising an organophosphorous compound having the general formula:

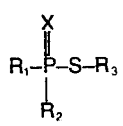

I

in which

$R_1$ and $R_2$, which may be the same or different, are alkyl or alkoxy radicals,

$R_3$ is an alkyl, aryl, substituted alkyl or substituted aryl radical, and

X is sulphur or oxygen, and a further organophosphorous compound having the general formula:

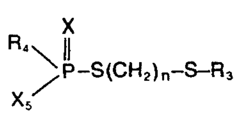

II

in which,

$R_4$ and $R_5$, which may be the same or different, are alkoxy radicals,

$R_3$ and X are as above and n is a whole number between 1 and 10.

EP 0 002 123 A1

"INSECTICIDE PREPARATION"

This invention relates to insecticides and to methods of making and using the insecticides.

According to one aspect of the invention, an insecticide preparation comprises an organophosphorous compound having the general formula:

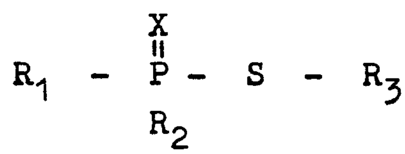

(I)

in which

$R_1$ and $R_2$, which may be the same or different, are alkyl or alkoxy radicals,

$R_3$ is an alkyl, aryl, substituted alkyl, or substituted aryl radical, and

X is sulphur or oxygen, and a further organophosphorous compound having the general formula:

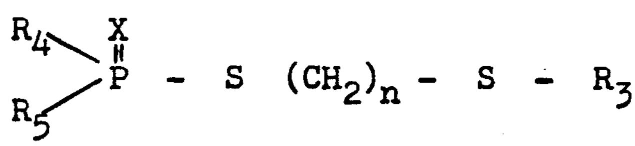

(II)

in which,

$R_4$ and $R_5$, which may be the same or different, are alkoxy radicals,

$R_3$ and X are as above and n is a whole number between 1 and 10.

The alkyl radicals which may comprise $R_1$, $R_2$ and $R_3$ may be methyl, ethyl, propyl or higher linear or branched chain radicals.

The alkoxy radicals which may comprise $R_1$, $R_2$, $R_4$

and $R_5$ may be methoxy, ethoxy, propoxy, or higher linear or branch chain radicals.

The aryl radicals which may comprise $R_3$ may be phenyl.

The substituted radicals which may be present in the radicals which may comprise $R_3$ may be alkyl or aryl or may be halides.

The preparations may further comprise conventional adjuvants, as required, such as a solvent (e.g. butyl, propyl or other alcohol, or mixtures thereof), a stabilizer (e.g. diethylene glycol, propylene glycol, butyl dioxitol or mixtures thereof) or an emulsifier (e.g. benzyl p-oxydiphenyl polyglycol ether), and mixtures thereof.

The preparations are preferably absorbed into an inert carrier, e.g. pumice or absorbent clay granules such as attapulgite, montmorrillonite, diatomite or kaolinite.

When pumice is used as the carrier it may be that no stabilizer need be present in the preparation.

Insecticides of the organophosphorous type are widely used for the control of pests.

Two of the major pests of the brassicas (cabbage, brussel sprouts, cauliflower, kale etc.) are the cabbage root fly (Erioischia brassicae) and the Cabbage aphid (Brevicoryne brassicae).

Insecticides of the organophosphorous type are widely used for the control of these pests.

For the control of cabbage root fly, a preparation with ethyl S-phenyl ethylphosphonothiolothionate (British

Standard common name "Fonofos"), a commercially available example of Formula I, as active ingredient, has been frequently used.

For the control of cabbage aphid a preparation with diethyl S-[2-(ethylthio)ethyl] phosphorothiolothionate (British Standard common name "Disulfoton"), a commercially available example of Formula II, as active ingredient, has been widely used.

Due to their high mammalian toxicity these organophosphorous insecticides are normally applied in the form of a granular preparation, a type of formulation which is widely used and acknowledged as a safe means of applying toxic insecticides.

Neither Fonofos or Disulfoton, nor presently available compounds of similar structure, are claimed to give worthwhile control of the non-specified pest, nor in practice do trials results show or suggest any such control.

In the past, season long control of cabbage root fly and cabbage aphid has demanded applications of two or more insecticidal preparations, this being inconvenient and expensive to the farmer. Most farmers only have one set of application equipment, as this is all that they normally require.

It has now been found that a single application of an insecticide preparation according to the invention gives effective and improved control of both pests.

Not only is it more convenient and cheaper to apply the insecticides in a single operation, but also trials

have shown that the level of insect control may be greater than by using the two materials separately. The combined formulation has given better control of cabbage root fly than Fonofos or compounds of similar structure alone and better control of cabbage aphid than Disulfoton or compounds of similar structure alone.

In view of this it may further be that the combined formulation offers improvements in the control of other pests for which Fonofos and Disulfoton type compounds have been used individually, for example, to control aphid and carrot fly in carrots, celery, parsnips and other root crops, wheat bulbfly and wire worm in many crops, aphids in potatoes, french and runner beans, marrows and many other crops and onion fly in onions.

According to a further aspect of the invention, a method of making an insecticide preparation comprises absorbing the compounds of Formulas I and II, optionally with stabilizers, emulsifiers or solvents, into a granular insert carrier. The compounds may be premixed before application to the granules, and may be present in equal or unequal proportions of from 1 to 20% each by weight of the preparation.

According to yet a further aspect of the invention a method of controlling crop pests comprises application of an insecticide preparation as defined above to the soil carrying or to carry the crop. The application may be by surface or subsurface placement of the preparation. The application may be at the drilling

stage for direct drilled crops or at transplanting for transplanted crops. The preparation may also be applied, e.g. to the surface of the soil surrounding the plants at any stage up to 6 weeks before harvesting.

The following Examples, in which all parts are by weight, illustrate the invention.

EXAMPLE 1

An insecticide preparation was prepared by impregnating Fullers earth granules with the following mixture:

| | |
|---|---|
| Fonofos | 4 parts |
| Disulfoton | 6 parts |
| emulsifier | 1 part |
| solvent | 0.6 parts |
| stabilizer | 1 part |

12.6 parts of this mixture were absorbed into 87.4 parts of clay granules to yield 100 parts of an insecticide containing 4% Fonofos and 6% Disulfoton.

EXAMPLE 2

A further insecticide preparation was prepared by impregnating pumice granules with the following mixture:

| | |
|---|---|
| Fonofos | 5 parts |
| Disulfoton | 5 parts |
| emulsifier | 0.5 parts |
| solvent | 0.6 parts |

11.1 parts of this mixture were absorbent into 88.9 parts of pumice to yield 100 parts of an insecticide containing 5% Fonofos and 5% Disulfoton.

EXAMPLE 3

Trials identified as Trials 1 to 3 were carried out at three different sites. In each trial three groups of 8 rows of brussel sprouts were treated at planting time as follows. The application of insecticide was by subsurface placement.

1st Group: Preparation of Example 1 at the rate of 175 gram per 100m row

2nd Group: 10% Fonofos granules at 70 gram per 100m

3rd Group: 10% Disulfoton granules at 105 gram per 100m.

A fourth Group was left untreated as a control.

Planting took place in mid-May and the plants were assessed for insect control in early August - See Table 1.

EXAMPLE 4

Three further trials, Trials 4 to 6, were carried out at three further sites. In each trial three groups of 10 rows of cabbage were treated at drilling time as follows. The application of insecticide was by the bow-wave technique.

1st Group: Preparation of Example 2 at the rate of 175 gram per 100m row

2nd Group: 10% Fonofos granules at 70 gram per 100m

3rd Group: 10% Disulfoton granules at 105 gram per 100m.

A fourth Group was left untreated as a control,

Drilling took place in late April and the plants were assessed for insect control in early September - See Table 2.

TABLE 1

| Treatment | 1st Group (Example 1) | 2nd Group (Fonofos) | 3rd Group (Disulfoton) | 4th Group (Control) |
|---|---|---|---|---|
| TRIAL 1 | | | | |
| Cabbage Root Fly: | | | | |
| (a) Mines* | 13 | 16 | 47 | 29 |
| (b) Larvae and pupae* | 6 | 7 | 31 | 32 |
| Cabbage Aphid | Not Counted | Not Counted | Not Counted | Not Counted |
| Yield ≠ | 10.9 (4.3) | 9.3 (3.7) | 8.6 (3.4) | 9.8 (3.9) |
| TRIAL 2 | | | | |
| Cabbage Root Fly: | | | | |
| (a) Mines* | 3 | 13 | 16 | 15 |
| (b) Larvae and pupae* | 0 | 12 | 6 | 8 |
| Cabbage Aphid* | 3 | 78 | 68 | 93 |
| Yield ≠ | 4.8 (1.9) | 4.1 (1.6) | 4.3 (1.7) | 4.2 (1.7) |
| TRIAL 3 | | | | |
| Cabbage Root Fly; | | | | |
| (a) Mines* | 3 | 9 | 14 | 30 |
| (b) Larvae and pupae* | 1 | 4 | 10 | 17 |
| Cabbage Aphid* | 5 | 55 | 25 | 80 |
| Yield ≠ | 12.0 (4.8) | 11.2 (4.5) | 11.7 (4.7) | 11.9 (4.7) |

*per 10 Plants. ≠tons/acre;bracketed figures tonnes/hectare.

TABLE 2

| Treatment | 1st Group (Example 2) | 2nd Group (Fonofos) | 3rd Group (Disulfoton) | 4th Group (Control) |
|---|---|---|---|---|
| TRIAL 4 | | | | |
| Cabbage Root Fly Larvae and Pupae per 10 plants | 26 | 32 | 46 | 45 |
| Cabbage Aphid % Plants Infected | 21 | 60 | 24 | 69 |
| TRIAL 5 | | | | |
| Cabbage Root Fly Larvae and Pupae per 10 plants | 2 | 9 | 13 | 12 |
| Cabbage Aphid % Plants Infected | 6 | 56 | 16 | 60 |
| TRIAL 6 | | | | |
| Cabbage Root Fly Larvae and Pupae per 10 plants | 2 | 6 | 14 | 15 |
| Cabbage Aphid % Plants Infected | 12 | 47 | 17 | 55 |

CLAIMS

1. An insecticide preparation comprising an organophosphorous compound having the general formula:

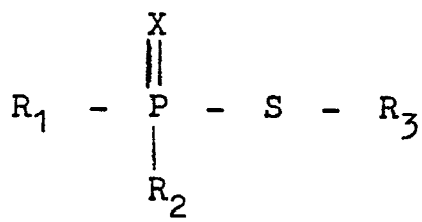 I

in which

$R_1$ and $R_2$, which may be the same or different, are alkyl or alkoxy radicals,

$R_3$ is an alkyl, aryl, substituted alkyl or substituted aryl radical, and

X is sulphur or oxygen, and a further organo-phosphourous compound having the general formula:

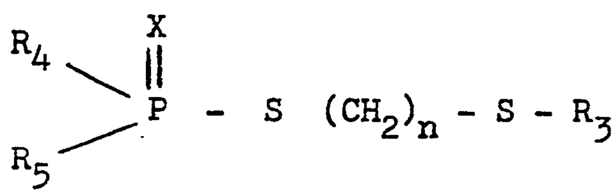 II

in which,

$R_4$ and $R_5$, which may be the same or different, are alkoxy radicals,

$R_3$ and X are as above and n is a whole number between 1 and 10.

2. An insecticide preparation as claimed in Claim 1 in which the compound of Formula I is Fonofos and the compound of Formula II is Disulfoton.

3. An insecticide preparation as claimed in Claim 1 or Claim 2 absorbed into granules of an inert carrier material.

4. An insecticide preparation as claimed in Claim 3 in which the compounds of Formulae I and II are present in the granules in equal or unequal proportions of from 1 to 20% each by weight of the granules.

5. A method of making an insecticide preparation which comprises absorbing compounds of Formulae I and II, as herein defined, into a granular inert carrier.

6. A method as claimed in Claim 5 in which the components of Formulae I and II are admixed before adsorbtion into the carrier.

7. A method as claimed in Claim 5 or Claim 6 wherein the compound of Formula I is Fonofos and the compound of Formula II is Disulfoton.

8. A method as claimed in any of Claims 5 to 7 wherein the compounds of Formulae I and II are used in equal or unequal proportions of from 1 to 20% each by weight of the granules.

9. A method of controlling crop pests comprising application of an insecticide preparation as claimed in any of Claims 1 to 4 to the soil carrying or to carry the crop.

0002123

European Patent Office

# EUROPEAN SEARCH REPORT

Application number
EP 78 30 0615

## DOCUMENTS CONSIDERED TO BE RELEVANT

| Category | Citation of document with indication, where appropriate, of relevant passages | Relevant to claim |
|---|---|---|
| X | GB - A - 1 036 277 (BAYER)<br>* Claim 1; page 2, line 65 *<br>-- | 1 |
| A | US - A - 2 759 010 (W. LORENZ)<br>* Example 3 *<br>-- | 1 |
| A | GB - A - 939 946 (BAYER)<br>* Page 1, line 73 *<br>---- | 1 |

CLASSIFICATION OF THE APPLICATION (Int. Cl.²)

A 01 N 9/02
C 07 F 9/00

TECHNICAL FIELDS SEARCHED (Int.Cl.²)

A 01 N 9/02
9/36

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| The Hague | 16-02-1979 | NATUS |